# EUROPEAN PATENT SPECIFICATION

(11) **EP 1 761 015 B1**
(45) Date of publication and mention of the grant of the patent: **08.11.2017**
(21) Application number: 05108084.4
(22) Date of filing: 02.09.2005
(51) Int. Cl.: H04M 3/493, G10L 15/22

(54) **Self-adaptive user interface for dialogue systems**
Selbstanpassende Benutzerschnittstelle für Dialogsysteme
Interface utilisateur auto-adaptatif pour systèmes de dialogue

(43) Date of publication of application: 07.03.2007
(73) Proprietor: Swisscom AG, 3050 Bern (CH)
(72) Inventor: Van Kommer, Robert, 1752 Villars-sur-Glâne (CH)
(74) Representative: P&TS SA (AG, Ltd.)

(56) References cited:
- EP-A- 0 697 780
- EP-A- 1 102 241
- DE-A1- 10 035 869
- US-A- 6 016 336
- US-A1- 2002 147 593

## Description

### Field of the invention

The present invention relates to speech or multimodal controlled dialogue systems, and to methods for operating speech or multimodal controlled dialogue systems. The present invention also relates to self-adaptive user interfaces for speech and multimodal systems.

### Description of related art

Speech dialogue systems are commonly used for example in telephone networks for providing value added services to remote users calling the systems. Examples of services making use of speech dialogue systems include among others network based voice mails, automated directories, automated call centers, news and information services, finance and telebanking services, and so on. More recently, with the aim of increasing the ease of use, multimodal dialogue systems have also been developed. Herein, the input means comprise not only the user's voice, but also some haptic means, for example a keypad, a keyboard or a stylus. Conversely, output means comprise not only the loudspeaker of the user's device, but also its display. Thus, a user can select the most convenient means for entering orders or requests, and receive answers simultaneously as synthesized voice and over a text or graphical user interface.

Speech and multimodal dialogue systems usually comprise a speech analysis system for analyzing a user's spoken requests, a speech synthesis system for synthesizing the system's prompts and answers, as well as a dialogue manager for preparing the information delivered to the user at each stage of the dialogue. Speech analysis systems, based for example on Hidden Markov Models or neural networks, and speech synthesis systems are known per se and will not be described in more detail. The present invention relates more particularly, but not exclusively, to improvements of the dialogue manager.

Existing dialog managers often have the disadvantage of presenting a fixed menu structure to all users. For instance, in common voice mail systems, users have to select successive options in a hierarchical menu structure. The menu structure is not likely to suit the different needs of different users with different levels of expertise or different preferences. For example, neophytes won't like a dialogue that proposes many options they don't need or even don't understand; they would instead prefer fewer options, but more comments on each possible choice. On the other hand, advanced users will be frustrated and slowed by a helpful dialogue; instead, they would prefer having the possibility of selecting options directly with short cuts, and menus proposing a wider choice of options and functionalities.

It is an aim of the present invention to propose a new speech or multimodal controlled dialogue system and method that better address the levels of expertise and other behavorial status varying between different users.

EP-A1-1 102 241 describes an adaptive dialogue system, in which the dialogue characteristic is adapted to the specific wishes of each user, based on experience relating to each user. Thus, for example, options more commonly selected by a user will be presented before infrequently selected options in a menu. The dialogue system will also be adapted to each user in order to better understand what the user means by certain instructions.

The method described in EP-A1-1 102 241 however has the drawback that only portions of the menu that are accessed by a user will actually be adapted. Even a user who demonstrates a very high level of expertise in one portion of the menu, for example by selecting advanced options or extensive use of abbreviated commands, will be treated like a novice when he accesses another new portion of the menu. This is because the system does not learn the level of expertise of the user, but only tries to guess the most adapted dialog form at each portion of the dialog. The situation is even more critical when the user accesses for the first time a new service; in this case, he will invariably be treated like a beginner, even if he demonstrated a very high level of expertise with similar systems.

EP-A2-0 323 381 describes a method for adapting the help dialog presented to a user based on the user's experience level with the system. The usefulness of the method is restricted to the help function of a software application; speech or multimodal services are not described in this document. Furthermore, the level of experience determined by an application is only used by this application; the document fails to recognize that a user familiar with an application is likely to prefer an interface for advanced users when using other applications, especially similar applications or applications of the same provider.

US-A-2002/0147593 describes a speech based interface that distinguishes between novice and more experienced users. This document recognizes that novices tend to prefer full prompts with explanatory introductions, while experienced users, having learned what speech inputs the system requires, prefer interfaces having prompts that promote the expeditious completion of tasks. Thus the described method suggests minimizing introductory information given to experienced users. The solution also fails to address the problem of skilled users accessing a new service and who will invariably be treated like novices. Moreover, the switch from full prompts to tapered prompts is triggered by very simple criteria, like the number of corrects answers to a full prompt. While certainly easy to program, a user classification based on simple thresholds does not take into account the many parameters that may be used for distinguishing users.

US-A-5,535,321 describes another system for establishing multiple user interfaces with different levels of complexity. Selection of an interface is based on user profiles, which can be altered manually by the users or automatically by the occurrence of a predefined event. This solution is not related to speech or multimodal services, classifies the users into different categories using only very simple functions, and fails to address the issue of wrong classification of generally skilled users accessing a new service.

US-A-6,781,807 suggests adapting a graphical user interface (GUI) of a computer system to different users in accordance with their access rights. Thus the interface of an administrator will be different from that used for a normal user. This invention is not related to speech or multimodal remote services. Moreover, highly skilled end-users may have to use an interface for novices, even after repeated use of the system.

Another method for providing an individual voice menu, adapted to the level of experience of each customer, is described in WO-A1-02/06952. Adaptation of the interface depends on events such as number of uses of the system, number of errors, use of the help function, and so on. A correct classification of users is thus only possible after several accesses to the system. Moreover, the application does not suggest how to weight the different events in order to classify the users.

WO-A-98/16048 describes a method for assisting voice-dialing using a neural network model of the individual's calling behavior that predicts the likelihood that different numbers will be called. While this method makes use of elaborate user models, it fails to address the problem of the adaptation of the voice dialogue to the level of experience of the users.

DE-A1-100 35 869 relates to a method for facilitating dialogue in speech dialogue systems. According to the document, the interactive actions of customer-specific user behaviour are recorded and evaluated by means of scoring logic during the use of a speech-controlled telecommunication service (information service, inquiry service or speech-activated web application). As a result of said evaluation, the prompts and help services which correspond to the customer's level of experience within the framework of the dialogue are offered to the customer during further use of the service concerned. This provides an individual help service, menu guide and prompt according to the individual behaviour of the respective customer.

EP-A1-0 697 780 relates to system for varying the voice menus and segements presented to the user of a voice response system according to the competence of the user. The response time of a user to voice prompts is measured and an average response time is determined. It is assumed that the lower the average response time, the greater the competence of the user. The average response time is used as an index to a table of ranges of response times. Each range has respective voice segments associated therewith. The voice segments comprise oral instructions or queries for the user and vary according to the anticipated competence of the user. If the average response time changes such that the voice segments indexed are different to the current voice segments then a data base containing information relating to user competence is updated to reflect such a change. Accordingly, when the user next interacts with the voice response system a new set of voice segments more appropriate to the user's competence is been played.

US-A-6,016,336 is disclosing a voice response system that functions in a receiving telephone system and learns individual caller behavior. The voice response system stores the caller's unique identifier and a menu option selected by the caller in response to a menu manuscript. For subsequent calls by the caller, the caller is presented with a truncated menu manuscript that allows the caller to more quickly connect to the desired system.

### Brief summary of the invention

Therefore, it is an aim of the present invention to provide an improved method for operating a speech or multimodal controlled dialogue system, and to provide an improved speech or multimodal controlled dialogue system.

More particularly, the present invention aims to provide a dialogue system better adapted to the level of experience of the user, and possibly even if the user is new to the system. The invention is defined by claim 1. Particular embodiments of the invention are disclosed in claims 2 to 6. According to an aspect of the invention, the dialogue is adapted to the behavorial status of the user, for example to his level of expertise. According to another aspect, this user behavorial status is based on user specific data retrieved from a storage area, for example a remote storage area, accessible by a plurality of different speech or multimodal controlled dialogue systems.

This has, among others, the advantage that the dialogue is adapted to a user behavorial status based not only on data collected from the current system, but also on data shared, and preferably collected, by several different speech or multimodal dialogue systems, which may be operated by one or even by several different service providers. Thus, even the level of expertise of a user who accesses a specific service for the first time can be correctly evaluated if enough user-related data has been collected in the shared storage area. A user who demonstrated a lot of skill with one of different systems will thus not be considered as a novice when he accesses a new system for the first time. Moreover, other user specific preferences or behavorial patterns may be automatically determined and used for adapting the dialogue.

According to another, possibly independent, aspect of the invention, the user behavorial status is determined from said user-specific data using Hidden Markov Models, neural networks, hybrid networks or other analysis methods based on dynamic patterns. This has the advantage that a very fine and precise classification of the users may be performed, taking into account several different parameters. This also has the advantage that the weighting of the different data and parameters used for determining the user behavorial status can be determined automatically, for example by adapting the Hidden Markov Models.

### Brief description of the drawings

The invention will be better understood with the aid of the description of an embodiment given by way of example and illustrated by the figures, in which:
- Fig. 1: is a block diagram of a network comprising a speech or multimodal dialogue system according to a first embodiment of the invention.
- Fig. 2: is a block diagram of a network comprising a speech or multimodal dialogue system according to a second embodiment of the invention.
- Fig. 3: illustrates an example of Hidden Markov Model.
- Fig. 4: illustrates an example of vector of parameters used for triggering a change of state in the Hidden Markov Models.

### Detailed description of possible embodiments of the invention

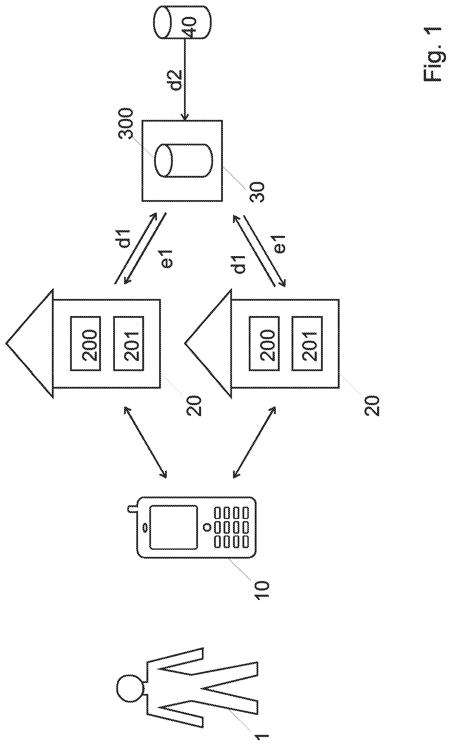

The architecture of the network illustrated in Figure 1 comprises a user's device 10, for example a conventional telephone, an ISDN phone, a mobile phone or a Voice over IP device. The user's device is operated by a user 1. Applications may be loaded and run by the user's device 10 to provide a better ease of use, improved multimodal functionalities or a greater set of functions when accessing one of the remote services; this is however not a requirement of the present invention.

The network of Figure 1 further comprises a plurality of speech or multimodal controlled dialogue systems 20 for providing various types of services to the users 1. Speech or multimodal controlled dialogue systems may be operated by one or several service providers, including the provider of the network used by the users for accessing the remote systems 20.

In this description and in the claims, we use the expression "speech controlled dialogue system" for designating a system, such as a computer or server, comprising a speech analysis system for analyzing orders and queries spoken by users of the system, and for executing those orders and queries, for example by giving a spoken answer and/or by executing an action. "Multimodal controlled systems" are systems in which the interaction between the user and the system uses an additional mode in addition to voice, for example a keypad, a keyboard or a touchpad as input means of the user's device, and/or a display as output means. While speech controlled dialogue systems are operable by any conventional telephone and usually do not require the user to watch the display or keypad, multimodal controlled systems generally provide a more convenient and more powerful interface.

Examples of speech or multimodal controlled systems 20 include, among others, network based voice mail systems, interactive information systems for delivering news, sports and weather reports, classified advertisings, chats, etc., directories, telebanking systems, medical assistance systems, and so on. While some systems may be operated by a telecommunication network provider, other may be run by private parties, including various value added service providers. Different systems may be hosted in different severs and locations accessible from a common public speech and/or multimodal network.

At least one of the systems 20 comprises a dialogue manager 200 for managing speech or multimodal dialogues with remote users 1. The dialogue manager prepares prompts and answers to the users' queries, and triggers actions ordered by the users. The behavior of the dialogue manager depends on commands and answers of the users, on external data, such a data retrieved from a database, and on the behavorial status of the users, as will be described further.

At least one of the systems 20 further comprises a classifier 201 for classifying the different users of the systems into different status, for example different expertise levels, based on user specific data retrieved from the current session, from previous sessions with the same users and/or from a remote and shared storage area 30.

Other possible components of the system 20, such as the speech analysis system, the speech synthesis system, the content database, etc., which are well known in the art, are not illustrated.

The system of Figure 1 further comprises a storage area 30, for example a database, a set of XML files, or any other suitable data repository. The storage area 30 is accessible by several different dialogue systems 20, possibly over a public data network, such as the Internet, or over an Extranet. The storage area may also be operated and located at one of the systems 20. In an embodiment, the storage area is run by a telecommunication network provider that also operates at least one of the systems 20.

The storage area 30 stores user specific data related to at least some of the users accessing at least some of the speech or multimodal controllable systems 20. User specific data may be retrieved from the different dialogue systems 20, as illustrated by the arrows d1 in the Figure, and/or from an external system, as illustrated by the arrow d2. In an embodiment, at least some of the user specific data used for classifying the users according to level or experience are furnished by a subscriber database 40 operated by the provider of the telecommunication network used by the users for accessing the services 20. In a GSM mobile network, the subscriber database 40 used by the services 20 may be the HLR (home location register), and/or any other database run by the mobile network provider and containing profiles or preferences of the subscribers.

Users accessing a service 10 are previously identified and/or authenticated, using for example the calling phone number (A-Number), data retrieved from a SIM card in the device 10, such as the MSISDN or the IMSI, biometric parameters, and/or data input by the user himself during the session, for example a user-id, customer identification, password, etc. Once a user has been identified, the classifier 201 will try to determine his level of experience, in order to suit the speech and/or multimodal interface.

For this, the classifier 201 uses session dependent data, internally available data and/or data retrieved from the shared storage area 30. The level of experience may also change automatically during a session, or may depend on the portion of the system accessed by the user. A single user may be for example an expert for certain functions, and a novice when navigating in other parts of the menu.

The following data e1, which are at least partly based on previous interactions of the user 1 with any one of said dialogue systems 20, may be used for determining the user behavorial status. Data include for example:
- Access to a specific dialogue system. A user dependent counter may be used for counting the number of accesses of a user to a system, or to one of different systems of one type. Each additional access increases the value of the counter, which may alter the level of experience associated with the user. In an embodiment, the total number of accesses to all systems may also be used.
- Errors of the user during a dialogue with one specific system, or with any system. Different weights may be associated to different errors, so that errors showing that the user is lost or does not understand the prompts of the system will be more considered than errors that may arise from inadvertence for instance.
- Access to a fallback system, for example when a user requests a human operator.
- Hesitations during a dialogue, which may determined by measuring the average time needed to answer questions or to make a choice, by recognizing specific words such as "Hum", "Hmm", etc., or by studying the prosody and intonation.
- User being trapped in the menu structure.
- Use of an indirect way to access an option in the dialogue, instead of using an available short cut.
- Use of short cuts or of abbreviated commands.
- Use of functionalities for experts or for novices.
- Use of multimodal functionalities.
- Barge in with the dialogue system.
- Explicit instructions entered by a user for modifying its level of expertise or user behavorial status.

Other events or data that may be retrieved from the storage area and taken into account for determining the level of expertise of the user include:
- expenses related to the use of one of the dialogue systems 20, or to any of said dialogue systems,
- expenses related to the use of the telecommunication network used for accessing said dialogue systems, as indicated by the network provider,
- kind of subscription to one of the dialogue systems and/or to the telecommunication network.

One will note that some data comes from the dialogue manager, some from the speech analysis engine, and some form the storage area 30.

In a preferred embodiment, the classifier 201 determines the behavorial status of a user 1 using Markov Models, preferably Hidden Markov Models, neural networks, hybrid networks or other analysis methods based on dynamic patterns.

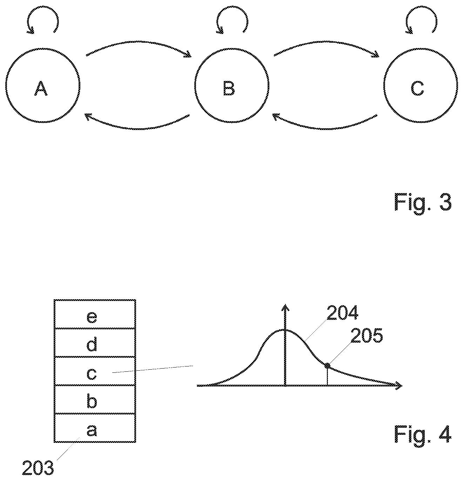

Hidden Markov Models are described, among others, in 'Fundamentals of Speech recognition' , Rabiner, L., Juang, B. published by Prentice-Hall, 1993. A simple example of Hidden Markov Model is illustrated on Figure 3. In this example, the model comprises three states A, B and C. Some states may be visible, i.e. actually correspond to behavorial status, as indicated by the classifier 201, while other states may be hidden, i.e. used internally only. At each instant, each user is in one state. Transitions from one state to another are possible at each instant, as indicated by the arrows on Figure 3, when some conditions are fulfilled.

Figure 4 shows an example of vector 203 associated with a specific state or with a specific transition. The vector is made up of different values, in this case 5 values a,b,c,d,e at the time t. One value may correspond for example to one piece of user specific data, or to a function of user specific data. For example, one value of the vector 203 may correspond to the number of accesses of the user to a specific system 20 until the time t.

Each value is associated with at least one Gaussian curve 204. The different values of a vector are weighted. At each time, a transition in one direction occurs with some probability when the different values fulfill some condition 205. The weights associated with each vector, as well as some coefficient associated with each transition, may be automatically adapted using methods known in the art, such as the Baum-Welsh algorithms. The user status is then determined by computing the most likely pattern among successive states; the idea is to find a sequence of transitions between states which is the most likely to describe the reality. The classification of users is thus dynamic.

The Markov Model may be adapted with training data, for example by asking some users during a training phase what level of expertise they prefer, or what are they other preferences for the dialogue, and/or on data e1 collected during use of the system, for example by trying to achieve an average acceptable error or fallback rate for each user. Genetic algorithms may also be used, as well as other self-learning schemes.

As already mentioned, the method of the invention may be used to model not only the level of expertise of the users, but also other behavioral patterns. For example, the Hidden Markov Models may be used for determining the preferences and/or the status of a user. In one embodiment, the Hidden Markov Models may for example determine that one specific user always chooses written input means rather than voice; this information may be delivered to the dialogue manager 200 and used for adapting the multimodal interface accordingly.

The behavorial user status is thus determined from data gathered during several sessions with one or several providers; this status is semi-permanent, in the sense that it will usually not change during one session, or change only once, or only a very limited number of times during access to a remote system.

The method of the invention has the advantage that a dialogue system can evaluate the level of expertise, or other behavioral status information, of a user based on data retrieved from other dialogue systems. Thus, even a user who accesses a service for the very first time may be presented with an interface that suits his habits and skills.

The data used for modifying the user behavorial status includes at least some data automatically retrieved during one or several sessions, i.e. data which has not been entered by the user with the aim of modifying its status. For example, some preferences of the user can be retrieved without the user having to give them explicitly.

Hidden Markoy Models may also be used for automatically retrieving the retrieved socio-demographic status of a user, including information such as an estimation of his likely age, gender, preferred language, domicile, wealth, and so on.

In the embodiment of figure 1, a different classifier 201 is provided in each dialogue system 20. Even if the classifiers of the different dialogue systems base their classification, at least in part, on data from the same storage area 30, the Markov Models in each classifier may be different, so that a single user may be classified as an expert in one system and as a less advanced user in another. This may be desirable, as someone who is an expert with some easy-to-use interface may still be a novice when using a more complicated system. Furthermore, one dialogue system may want to classify the users in 10 different levels, while another one may use only two levels, for example.

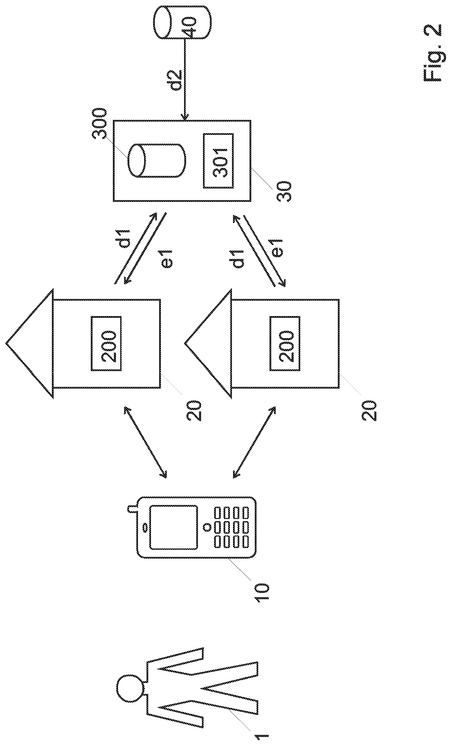

However, a drawback of the solution of Figure 1 is that a different classifier 201 is required in each dialogue system. In order to alleviate this problem, the embodiment of Figure 2 uses a common classifier 301 in the shared storage area for determining the user behavorial status. In this embodiment, the user specific data provided by the storage area directly indicates the status of the users.

The user behavorial status determined by the system may be used not only for minor adaptations of the dialogue, such as stylistic adaptations, adaptations of the number of options proposed and of the description of the options, but also for more proactive changes in a dialogue. It may even be possible to start a new dialogue session, for example a voice or multimodal session, depending on this status, or on changes in the status. In one embodiment, the system may proactively offer assistance, or even new products and new services, to specific users, depending on input from the behavorial status classifier. For example, the system may provide a subscription to a more powerful service to all users having reached a predefined expertise level. The system thus acts as a kind of HMM driven virtual salesman, trying to understand the behavior of the user, based on data from different services and using HMM, in order to promote use of new services, to provide assistance only when required, etc.

## Claims

1. A method for operating a communication system comprising at least one speech or multimodal controlled dialogue system (20), the method comprising the steps of:
using a classifier (201) for determining the level of expertise of a specific user accessing the dialogue system (20), based on user specific data (e1) remotely retrieved from a storage area (30), said storage area being accessible by a plurality of different speech or multimodal controlled dialogue systems,
adapting a dialogue of said dialogue system (20) with said specific user (1) to said level of expertise,
**characterized in that**
said classifier uses Hidden Markov Models for determining said level of expertise,
said Hidden Markov Models comprise some visible states that correspond to said levels of expertise and some hidden states that are used internally only.

2. The method of claim 1, said user specific data (e1) being at least partly based on previous interactions of said specific user (1) with one of said dialogue systems (20).

3. The method of claim 1 or 2, wherein at least one of the following user related events modifies the level of expertise associated with the user:
additional access to a specific dialogue system (20),
additional access to any dialogue system,
error during a dialogue,
access to a fallback system,
hesitations during a dialogue,
prosody as indicated by a speech recognition system,
unusual time to answer questions or to make choices,
user being trapped in said dialogue,
using a non direct way to access an option in said dialogue,
use of short cuts or abbreviated commands,
use of expert functionalities,
use of multimodal functionalities,
barge in with the dialogue system.

4. The method of one of the claims 1 or 3, wherein at least one of the following user related parameters modifies the level of expertise associated with the user:
expenses related to the use of one of said dialogue systems (20),
expenses related to the use of any of said dialogue systems (20),
expenses related to the use of a telecommunication network used for accessing said dialogue systems,
kind of subscription to one of said dialogue systems (20) and/or to said telecommunication network.

5. The method of claim 3 or 4, wherein a user (1) enters explicit instructions for modifying its user level of expertise.

6. The method of one of the claims 1 to 5, said step of adapting said dialogue comprising proactively offering assistance, new services or new products.

## Patentansprüche

1. Ein Verfahren zum Betreiben eines Kommunikationssystems aufweisend mindestens ein Sprach- oder multimodal gesteuertes Dialogsystem (20), wobei das Verfahren die folgenden Schritte aufweist:
Benutzen eines Klassifizierers (201) zum Bestimmen des Niveaus der Expertise eines bestimmten Benutzers, der auf das Dialogsystem (20) zugreift, basierend auf spezifischen Benutzerdaten (e1), die von einem entfernten Speicherbereich (30) erhalten werden, wobei der Speicherbereich von einer Vielzahl von verschiedenen Sprach- oder multimodal kontrollierten Dialogsystemen zugegriffen wird,
Anpassen eines Dialogs mit dem Dialogsystems (20) mit dem spezifischen Benutzer (1) entsprechend dem Niveau der Expertise, **dadurch gekennzeichnet, dass**
der Klassifizierer Hidden Markov Modelle zur Bestimmung des Niveaus der Expertise verwendet,
die Hidden Markov Modelle einige sichtbare Zustande, die dem Niveau der Expertise entspricht und einige versteckte Zustände, die nur intern benutzt werden, aufweist.

2. Verfahren nach Anspruch 1, wobei die Benutzerspezifischen Daten (e1) mindestens teilweise auf vorigen Interaktionen des spezifischen Benutzers (1) mit einem der Dialogsysteme (20) basiert.

3. Verfahren nach Anspruch 1 oder 2, wobei mindestens eines der folgenden Benutzer bezogenen Events das mit dem Benutzer assoziierten Niveau der Expertise modifiziert:
zusätzlicher Zugriff auf ein spezifisches Dialogsystem (20),
zusätzlicher Zugriff auf irgend ein Dialogsystem,
Fehler während eines Dialogs,
Zugang zu einem Rückzugsystem,
Zögern während eines Dialogs,
Prosodie wie vom Spracherkennungssystem angezeigt,
unübliche Zeit, um Fragen zu beantworten oder um Auswahl zu treffen,
Benutzer, der in einem Dialog gefangen ist,
Verwenden eines nicht direkten Wegs, um auf eine Option in dem Dialog zuzugreifen,
Verwendung von Abkürzungen oder verkürzten Befehlen,
Verwendung von Expertenfunktionalitäten,
Verwendung von multimodalen Funktionalitäten,
barge-in mit dem Dialogsystem.

4. Verfahren nach einem der Ansprüche 1 bis 3, wobei mindestens einer der folgenden Benutzer spezifischen Parameter das mit dem Benutzer assoziierten Niveau der Expertise verändert:
Ausgaben in Bezug auf die Verwendung eines der Dialogsysteme (20),
Ausgaben in Bezug auf die Verwendung irgendeines der Dialogsysteme (20),
Ausgaben in Bezug auf die Verwendung eines Telekommunikationsnetzwerks, das für den Zugriff auf das Dialogsystem verwendet wird,
Art des Abonnements für das Dialogsystem (20) und/oder für das Telekommunikationsnetzwerks.

5. Verfahren nach Anspruch 3 oder 4, wobei ein Benutzer (1) explizite Befehle für das Verändern seines Niveaus der Expertise eingibt.

6. Verfahren nach einem der Ansprüche 1 bis 5, wobei der Schritt für das Anpassen des Dialogsystems das proaktive Anbieten einer Assistenz, neuer Dienstleistungen oder neuer Produkte aufweist.

## Revendications

1. Procédé pour le fonctionnement d'un système de communication comprenant au moins un système de dialogue contrôlé par parole ou de façon multimodale (20), le procédé comprenant les étapes suivantes:
utiliser un classificateur (201) pour déterminer le niveau d'expertise d'un utilisateur spécifique accédant au système de dialogue (20), sur la base de données spécifiques à l'utilisateur (e1) extraites à distance d'une zone de stockage (30), ladite zone de stockage étant accessible par une pluralité de différents systèmes de dialogue contrôlé par parole ou de façon multimodale,
adapter un dialogue dudit système de dialogue (20) avec ledit utilisateur spécifique (1) audit niveau d'expertise,
**caractérisé en ce que**
ledit classificateur utilise des modèles de Markov cachés pour déterminer ledit niveau d'expertise,
lesdits modèles de Markov cachés comprennent quelques états visibles qui correspondent auxdits niveaux d'expertise et quelques états cachés qui sont utilisée de façon interne uniquement.

2. Procédé selon la revendication 1, dans lequel lesdites données spécifiques à l'utilisateur (e1) sont au moins partiellement basées sur des interactions antérieures dudit utilisateur spécifique (1) avec un desdits systèmes de dialogue (20).

3. Procédé selon la revendication 1 ou 2, dans lequel au moins l'un des événements suivants liés à l'utilisateur modifie le niveau d'expertise associé à l'utilisateur:
accès supplémentaire à un système de dialogue spécifique (20),
accès supplémentaire à tout système de dialogue,
erreur lors d'un dialogue,
accès à un système de secours,
hésitations pendant un dialogue,
une prosodie comme indiqué par un système de reconnaissance de la parole,
un temps inhabituel pour répondre à des questions ou pour faire des choix,
l'utilisateur étant piégé dans ledit dialogue,
utilisation d'un moyen non direct pour accéder à une option dans ledit dialogue,
utilisation de raccourcis ou de commandes abrégées,
utilisation de fonctionnalités expertes,
utilisation de fonctionnalités multimodales,
couper la parole au système de dialogue.

4. Procédé selon l'une des revendications 1 ou 3, dans lequel au moins l'un des paramètres suivants liés à l'utilisateur modifie le niveau d'expertise associé à l'utilisateur:
les dépenses liées à l'utilisation de l'un desdits systèmes de dialogue (20),
les dépenses liées à la L'utilisation de l'un quelconque desdits systèmes de dialogue (20),
les dépenses liées à l'utilisation d'un réseau de télécommunication utilisé pour accéder auxdits systèmes de dialogue,
type d'abonnement à l'un desdits systèmes de dialogue (20) et/ou audit réseau de télécommunication.

5. Procédé selon la revendication 3 ou 4, dans lequel un utilisateur (1) introduit des instructions explicites pour modifier son niveau d'expertise d'utilisateur.

6. Procédé selon l'une des revendications 1 à 5, ladite étape consistant à adapter ledit dialogue comprenant de proposer de façon proactive une assistance, de nouveaux services ou de nouveaux produits.
